Europäisches Patentamt

European Patent Office

Office européen des brevets

(19)

(11) Veröffentlichungsnummer: **0 262 510 B1**

# EUROPÄISCHE PATENTSCHRIFT

(12)

(45) Veröffentlichungstag der Patentschrift: **27.11.91**

(51) Int. Cl.$^5$: **C01B 17/88**

(21) Anmeldenummer: **87113514.1**

(22) Anmeldetag: **16.09.87**

(54) Verfahren zum Aufkonzentrieren von Schwefelsäure.

(30) Priorität: **25.09.86 DE 3632623**

(43) Veröffentlichungstag der Anmeldung:
**06.04.88 Patentblatt 88/14**

(45) Bekanntmachung des Hinweises auf die
Patenterteilung:
**27.11.91 Patentblatt 91/48**

(84) Benannte Vertragsstaaten:
**BE DE FR GB NL**

(56) Entgegenhaltungen:
**EP-A- 0 156 199**
**DE-A- 3 015 957**

**CHEMIE-ING.-TECHN., Band 46, Nr. 14, Juli
1974, Seiten 589-591; A. HEITMANN et al.:
"Recycling-Prozesse für Schwefel-
Verbindungen"**

(73) Patentinhaber: **BAYER AG**

**W-5090 Leverkusen 1 Bayerwerk(DE)**

(72) Erfinder: **Lailach, Günter, Dr.**
**Bodelschwinghstrasse 23**
**W-4150 Krefeld(DE)**
Erfinder: **Gerken, Rudolf, Dr.**
**Rathertrasse 79**
**W-4150 Krefeld(DE)**

## Beschreibung

Verfahren zum Aufkonzentrieren von Schwefelsäure

Die vorliegende Erfindung betrifft ein Verfahren zum Aufkonzentrieren von Schwefelsäure auf Konzentrationen bis ca. 80 % $H_2SO_4$ durch mehrstufige Eindampfung.

Verdünnte Schwefelsäure fällt bei vielen Herstellungsprozessen anorganischer und organischer Verbindungen und bei der Reinigung $SO_2$-haltiger Abgase mit Konzentrationen bis unter 10 % $H_2SO_4$ an. Für die Wiederverwendbarkeit dieser Säure ist es im allgemeinen Voraussetzung, daß die Schwefelsäure auf Konzentrationen über 60 % $H_2SO_4$ eingedampft wird und die Verunreinigungen abgetrennt oder zerstört werden.

Für eine energetisch günstige Eindampfung dieser Schwefelsäuren werden insbesondere mehrstufige Verfahren vorgeschlagen, bei denen die Brüden aus einer Verdampfungsstufe als Heizmittel in der nächsten dienen. Bei der Eindampfung von Schwefelsäure liegen aber die Apparatekosten infolge der starken Korrosivität der Säure relativ hoch. Dadurch und durch die Tatsache, daß der Siedepunkt der Säure mit steigender $H_2SO_4$-Konzentration stark ansteigt, bzw. der $H_2O$-Partialdruck bei gegebener materialbedingter maximaler Verdampfungstemperatur mit steigender $H_2SO_4$-Konzentration stark abnimmt, werden mehrstufige Verfahren bisher nur für den Bereich bis ca. 70 % $H_2SO_4$ angewendet (sog. Vorkonzentrierung). Dabei werden aus Kostengründen bevorzugt Verdampfer und Rohrleitungen aus gummiertem Stahl oder Kunststoff und Wärmeaustauscher aus Graphit eingesetzt. Damit sind die Arbeitstemperaturen auf maximal 100 - 130°C beschränkt, so daß je nach den erreichbaren Temperaturen bei der Brüdenkondensation im allgemeinen 60 bis 70 % $H_2SO_4$ als Endkonzentration mit vertretbarem Aufwand erreicht werden.

Der Einsatz von emaillierten Apparaten und Tantalwärmetauschern ist mit so hohen Kosten verbunden, daß er nur dann erfolgt, wenn preiswertere Konstruktionsmaterialien nicht mehr verwendet werden können. Das ist der Fall bei der Eindampfung der Schwefelsäure von ca. 60 bis 70 % $H_2SO_4$ auf 80 bis 92 % $H_2SO_4$. In dieser Verdampfungsstufe sind wegen der geringen $H_2O$-Partialdrücke bereits Temperaturen von 120 bis 195°C nötig, wobei die Maximaltemperatur durch die Beständigkeit von Tantal als Konstruktionsmaterial der Wärmetauscher gegeben ist. Bevorzugte Werkstoffe für Apparate, Rohrleitungen und Pumpen sind Glas, Email, Silicium-Eisen-Guß, Teflon®. Wegen der hohen Kosten der Tantalwärmetauscher wird mit Dampf von 5 bis 15 bar geheizt, d.h. die Verdampfung des Wassers erfolgt einstufig (vgl. Winnacker, Küchler, Chemische Technologie, Bd. 2, 4. Aufl. 1982, Carl-Hanser-Verlag München Wien, S. 65-72).

Eine Aufgabe der vorliegenden Erfindung ist die Bereitstellung eines wirtschaftlichen Verfahrens zur Konzentrierung von verdünnter Schwefelsäure auf Konzentrationen bis ca. 80 %, welches die beschriebenen Nachteile der oben beschriebenen Verfahren nicht aufweist.

Überraschenderweise konnte nun ein Verfahren gefunden werden, welches diese Anforderungen erfüllt, bei dem die verdünnte Schwefelsäure in einer Kombination aus Umlauf-oder Fallfilmverdampfern mit einem Horizontalverdampfer aufkonzentriert wird.

Gengenstand der vorliegenden Erfindung ist ein Verfahren zum Aufkonzentrieren von Schwefelsäure auf Konzentrationen bis ca. 80 % $H_2SO_4$ durch mehrstufige Eindampfung, wobei die Eindampfung auf Konzentrationen von 40 bis 65 % $H_2SO_4$ bei Unterdruck in Umlauf- oder Fallfilmverdampfern so erfolgt, daß eine Verdampferstufe durch die Brüden aus einem nachgeschalteten Horizontalverdampfer beheizt wird, in dem die Schwefelsäure bei geringem Unterdruck, Normaldruck oder Überdruck auf Konzentrationen von 66 bis 80 % $H_2SO_4$ eingedampft wird.

Entsprechend dem erfindungsgemäßen Verfahren erfolgt die Eindampfung der Schwefelsäure mehrstufig. Die Eindampfung der Schwefelsäure auf 40 bis 65 % $H_2SO_4$ erfolgt bei Unterdruck und Temperaturen von maximal 120°C ein-oder mehrstufig in Umlaufverdampfern oder Fallfilmverdampfern mit Graphit- oder PTFE-Wärmetauschern. Die weitere Eindampfung der 40 bis 65 %igen Schwefelsäure auf ca. 66 - 80 % $H_2SO_4$ erflogt bei geringem Unterdruck, Normaldruck oder Überdruck in einem Horizontalverdampfer mit einem Rohrbündelwärmetauscher aus Tantal.

Das erfindungsgemäße Verfahren wird vorzugsweise so durchgeführt, daß die Eindampfung der Schwefelsäure im Horizontalverdampfer so erfolgt, daß 66 - 80 %ige Schwefelsäure mit Temperaturen von 160 bis 195°C ausgespeist wird.

Als bevorzugte Konstruktionsmaterialien des Horizontalverdampfers sind Glas oder emaillierter Stahl mit PTFE geeignet.

Der Wärmetauscher des Horizontalverdampfers wird vorzugsweise mit 8 bis 20 bar - Dampf beheizt. Die Brüden aus dem Horizontalverampfer dienen bevorzugt als Heizmittel in einer Umlauf- oder Fallfilmverdampferstufe, deren Brüden evtl. in einer nächsten Stufe als Heizmittel dienen können. Die optimale Zahl der Umlauf- oder Fallfilmverdampferstufen ergibt sich aus wirtschaftlichen Überlegungen, bei denen die Gesamtleistung der Anlage, Energiekosten und verfügbares Kühlwasser wesentliche Einflußgrößen sind.

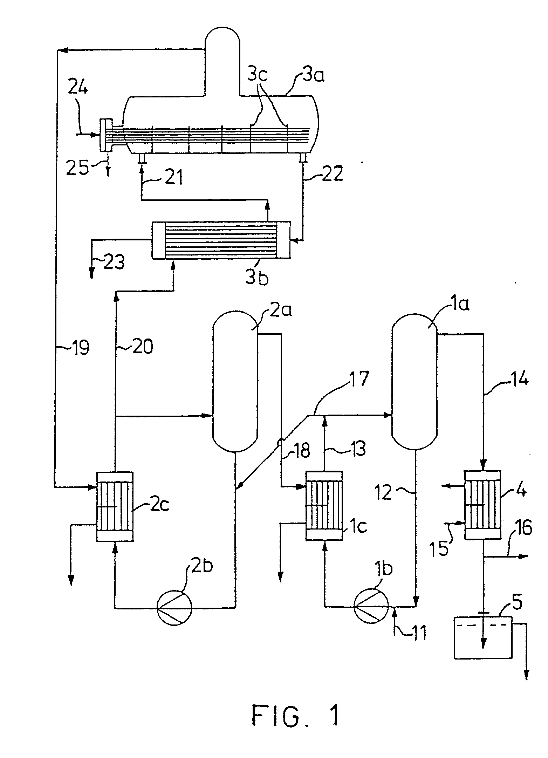

Das erfindungsgemäße Verfahren soll anhand der Fig. 1 verdeutlicht werden. Verdünnte Schwefelsäure wird in die Verdampferstufe (1) eingespeist. Dargestellt ist ein Zwangsumlaufverdampfer, bestehend aus dem Verdampfer (1a), der Kreislaufpumpe (1b) und dem Wärmetauscher (1c). Die Dünnsäure (11) wird in die Kreislaufsäure (12) eingespeist und zusammen mit dieser im Wärmetauscher (1c) mittels der Brüden (18) aus der Verdampferstufe (2) erwärmt. Aus der erwärmten Kreislaufsäure (13) wird im Verdampfer (1a) entsprechend dem Unterdruck Wasser verdampft. Die Brüden (14) werden in einem Kondensator (4) durch Kühlung mit Wasser oder einem anderen Kühlmedium (15) kondensiert und in das Tauchgefäß (5) abgeleitet. Die Brüdenkondensation kann auch durch direkten Kontakt mit dem Kühlmedium erfolgen. Die nichtkondensierbaren Gase (16) werden mit einer Vakuumpumpe aus dem System abgezogen.

Aus der Verdampferstufe (1) fließt teilweise eingedampfte Schwefelsäure (17) in die Verdampferstufe (2). Stufe (2) arbeitet bei höherer Temperatur und höherem Druck als Stufe (1). Als Heizmedium im Wärmetauscher (2c) dienen die Brüden (19) aus dem Horizontalverdampfer (3a) der Verdampferstufe (3). Die aus Verdampferstufe (2) in die Stufe (3) ausgespeiste 40 - 65 %ige Schwefelsäure (20) wird vorzugsweise in einem Glas- oder PTFE-Wärmetauscher (3b) durch die aus dem Verdampfer (3a) mit 160 -195° C ausgespeiste 66 - 80 %ige Schwefelsäure (22) vorgeheizt. Dadurch, daß diese Säure (21) etwa mit Siedetemperatur in den Horizontalverdampfer (3a) eingespeist wird, kann die Fläche des Tantalwärmetauschers besonders klein gehalten werden. Demselben Zweck dient der vorzugsweise Einbau von senkrechten Trennwänden (3c) entlang den Wärmetauscherrohren, durch die die mehrstufige Wirkungsweise dieses Verdampfers erreicht wird. Die im Wärmetauscher (3b) auf 60 bis 120° C abgekühlte Säure (23) kann durch die in das System eingespeiste Dünnsäure (11) oder mittels Kühlwasser weiter abgekühlt werden. Der Tantal-Wärmetauscher des Horizontalverdampfers (3a) wird mit 8 - 20 bar-Dampf (24) beheizt. Der Energieinhalt des Dampfkondensats (25) kann vorzugsweise dadurch zur Schwefelsäureeindampfung genutzt werden, daß eine Entspannungsverdampfung in den Heizmediumraum des Wärmetauschers (2c) erfolgt.

Die Vorteile des erfindungsgemäßen Verfahrens neben den vergleichbar geringen Apparatekosten liegen insbesondere darin, daß wegen des hohen Taupunktes der Brüden aus dem Horizontalverdampfer bei sonst gleichen Bedingungen (insbesondere gleicher Kühlwassertemperatur) eine Verdampfungsstufe mehr betrieben werden kann als bei bekannten Vorkonzentrierungsverfahren. Dadurch verringert sich der spezifische Energiebedarf um 20 bis 30 %. Besondere Vorteile ergeben sich auch dann, wenn nach den bekannten Verfahren wegen zur hoher Kühlwassertemperaturen eine mehrstufige Vorkonzentration mit Brüdenwärmenutzung nur wirtschaftlich möglich ist, wenn die Kühlwassertemperatur durch Kälteaggregate, mit entsprechendem Aufwand, gesenkt wird. Die Eindampfung der Säure von 40 - 65 % $H_2SO_4$ auf 66 - 80 % $H_2SO_4$ in einer Verdampferstufe mit Tantalwärmetauscher ermöglicht eine mindestens zweistufige Eindampfung auch bei extrem hohen Kühlwassertemperaturen von 30 bis 35° C. Durch die erfindungsgemäße Anwendung des mehrstufigen Horizontalverdampfers in der Stufe mit der höchsten Schwefelsäurekonzentration, liegt der Heizflächenbedarf in dieser Stufe bei ca. 20 bis 35 % im Vergleich zu Zwangsumlaufverdampfern, so daß der Einsatz hochwertiger Werkstoffe, insbesondere von Tantal, wirtschaftlich gerechtfertigt ist.

Die Vorteile des erfindungsgemäßen Verfahrens sollen durch die folgenden Beispiele im Vergleich zu den bekannten Verfahren verdeutlicht werden, ohne daß dadurch der Umfang der Erfindung eingeschränkt wird.

Beispiel 1

Schwefelsäure soll von 30 % $H_2SO_4$ auf 70 % $H_2SO_4$ eingedampft werden. Verglichen werden Anlagencharakteristik mit Energiebedarf bei der Verdampfung von 1 t $H_2O$/h nach einem bekannten Verfahren (1a) und dem erfindungsgemäßen Verfahren (1 b).

1 a) Die Eindampfung der Schwefelsäure kann wirtschaftlich sinnvoll nur 2-stufig durchgeführt werden. Als Verdampferanlage dient eine 2-stufige Vakuumzwangsumlaufverdampferanlage. Die 30 %ige Schwefelsäure wird in Stufe 1 eingespeist und bei 110° C auf 42 % $H_2SO_4$ eingedampft. Sie fließt in Stufe 2, wo sie bei 80° C auf 70 % $H_2SO_4$ eingedampft wird. Die Graphitröhrenwärmetauscher der Stufe 1 wird mit 3,6 bar-Dampf beheizt, der der Stufe 2 mit den Brüden aus Stufe 1. Die Brüden aus Stufe 2 werden direkt mit Kühlwasser kondensiert. Die eingespeiste 30 %ige Schwefelsäure wird durch die ausgespeiste 70 %ige Schwefelsäure von 25 auf 38° C vorgewärmt, wobei die 70 %ige Säure auf 30° C abgekühlt wird.

1 b) Die Eindampfung der Schwefelsäure erfolgt in einer 3-stufigen Anlage entsprechend Fig. 1. Im Wärmetauscher (3b) wird die in den Horizontalverdampfer (3a) eingespeiste Säure (21) auf 120° C aufgeheizt durch die ausgespeiste Säure (22), die dabei auf 80 °C abgekühlt wird. Die weitere Abkühlung der 70 %igen Schwefelsäure (23) auf 30 °C erfolgt durch die Dünnsäure (11), die dadurch vor der Einspeisung in Stufe (1) auf 45 °C aufgeheizt wird. Die Brüden aus Verdampfer (1a) werden durch direkten Kontakt mit Kühlwasser kondensiert.

Aus Stufe 1 wird 36 %ige Schwefelsäure in Stufe 2 eingespeist und aus dieser 46 %ige Schwefelsäure über Wärmetauscher (3b) in den Horizontalverdampfer:

Beim Vergleich der beiden Verfahren (1a) und (1b) (Tab.1), sind folgende Vorteile des erfindungsgemäßen Verfahrens festzustellen:

1. Der Energieverbrauch des erfindungsgemäßen Verfahrens beträgt nur 77 % des Energieverbrauches entsprechend dem Stand der Technik, bei Nutzung des Dampfkondensats zur Dampferzeugung nur 67 %.

2. Der Kühlwasserbedarf beträgt bei gleicher Wassertemperatur wegen des höheren Taupunktes der zu kondensierenden Brüden (1a: 27 °C, 1b: 31 °C) und der geringeren Wasserdampfmenge nur 42 %.

3. Wärmetauscherfläche und Kreislaufsäurestrom sind bei (1b) geringer, so daß die Anlagekosten für die Verdampferstufe 3 teilweise kompensiert werden. Diese sind aber wegen der einfachen Bauweise und der hohen spezifischen Verdampfungsleistung bei der erfindungsgemäßen Ausführung als Horizontalverdampfer ohnehin gering.

4. Beim herkömmlichen Verfahren (1a) sind im Umlaufverdampfer 110 °C als Verdampfungstemperatur (Stufe 1) erforderlich, wenn die Brüdenkondensation mit dem gegebenen Kühlwasser durchgeführt werden soll. Dadurch scheiden bereits viele preiswerte Werkstoffe für die Konstruktion von Rohrleitungen und Verdampfer aus. Beim erfindungsgemäßen Verfahren sind bei vergleichbarer Säurekonzentration nur 85 °C erforderlich (Stufe 2).

Beispiel 2

Es sollen 6 t/h 30 %ige Schwefelsäure auf 96 % $H_2SO_4$ eingedampft werden und die organischen Verunreinigungen durch Oxidation mit $HNO_3$ bei ca. 330 °C zerstört werden. Die Brüdenkondensation soll durch indirekte Kühlung erfolgen. Die Temperatur des verfügbaren Kühlwassers beträgt 30 °C.

2a) Problemlösung entsprechend dem Stand der Technik: Die Schwefelsäure wird in einem einstufigen Zwangsumlaufverdampfer mit Graphitröhrenwärmetauscher bei 100 °C auf 70 % $H_2SO_4$ eingedampft. Die eingespeiste 30 %ige Säure wird durch die ausgespeiste 70 %ige Säure von 30 auf 46 °C vorgewärmt. Die dabei auf 40 °C abgekühlte 70 %ige Säure wird der Hochkonzentrierung und oxidativen Reinigung nach Pauling/Plinke (vgl. Bodenbrenner et al. DECHEMA-Monogr. 86 (1980) 197). zugeführt. Vor der Einspeisung in den Dephlegmator erfolgt eine Vorwärmung durch die Brüden aus der Hochkonzentrierung. Die aus dem Kessel ausfließende 96 %ige Schwefelsäure (1.875 kg/h) wird in einem Rührkühler indirekt durch Kühlwasser auf 40 °C abgekühlt.

Die Betriebsparameter für Vorkonzentrierung und Hochkonzentrierung sind in Tab. 2 zusammengestellt. Bei der indirekten Brüdenkühlung der Vorkonzentrierung in einem Edelstahlröhrenwärmetauscher wird eine Temperaturerhöhung des Kühlwassers von 30 bis 40 °C zugelassen.

Eine mehrstufige Wasserverdampfung bei der Vorkonzentrierung unter Verwendung preiswerter Konstruktionsmaterialien ist nur möglich, wenn die Brüdenkondensation mit einem Kühlmittel tieferer Temperatur erfolgt oder eine Vorverdichtung der Brüden aus der 2. Stufe mittels dampfbetriebener Strahlsauger stattfindet.

2b) Problemlösung entsprechend dem erfindungsgemäßen Verfahren: Die Vorkonzentrierung der Schwefelsäure erfolgt 2-stufig von 30 auf 80 % $H_2SO_4$ in einer Anlage entsprechend Fig. 1, wobei das Umlaufverdampfersystem im Gegensatz zur Darstellung nur 1-stufig ist. Die aus dem Horizontalverdampfer ausgespeiste 80 %ige Säure wird durch die in diesen Verdampfer einzuspeisende 42 %ige Säure von 185 aus 92 °C gekühlt, wodurch letztere Säure auf 102 °C erwärmt wird. Die weitere Kühlung auf 40 °C erfolgt durch die 30 %ige Säure, die sich dabei auf 42 °C erwärmt.

Der Vergleich zeigt die Vorteile des erfindungsgemäßen Verfahrens:

1. Die Energieersparnis beträgt 30 %, bei Nutzung des Heizdampfkondensats zur Dampferzeugung 36 %.

2. Der Kühlwasserbedarf liegt bei 60 %.

3. Die Abmessungen des Zwangsumlaufverdampfersystems sind erheblich kleiner. Die Arbeitstemperatur von 65 °C statt 100 °C ermöglicht den Einsatz preiswerterer Werkstoffe, z.B. gummierte Behälter und Rohrleitungen.

## Tabelle 1

| Beispiel | | 1 a | | | 1 b | | |
|---|---|---|---|---|---|---|---|
| Verdampferstufe | | 1 | 2 | | 1 | 2 | 3 |
| Säureeinspeisung (30 % $H_2SO_4$) kg/h | | 1.750 | | | 1.750 | | |
| Säureausspeisung (70 % $H_2SO_4$) kg/h | | | 750 | | | | 750 |
| Temperatur | °C | 110 | 80 | | 45 | 85 | 120-170 |
| Druck | m/bar | 800 | 40 | | 45 | 200 | 1.000 |
| Säurekonzentration | % $H_2SO_4$ | 42 | 70 | | 36 | 46 | 46-70 |
| $H_2O$-Verdampfung | kg/h | 500 | 500 | | 300 | 305 | 395 |
| WAT-Fläche | $m^2$ | 9 | 26 | | 9 | 14 | 2,0 |
| Säurezwangsumlauf | $m^3$/h | 110 | 320 | | 110 | 170 | – |
| Kühlwasser: | °C | | 24 | 24/28+ | | | |
| | $m^3$/h | | 60 | 25/60 | | | |
| Heizdampf: | bar | 3,6 | | | | | 15 |
| | kg/h | 750 | | | | | 564 |
| | GJ/h | 2,05 | | | | | 1,57 |
| Heizdampfkondensat: | °C | 140 | | | | | 196 |
| | GJ/H | 0,44 | | | | | 0,48 |

EP 0 262 510 B1

Tabelle 2

| Beispiel | | 2a | | 2b | | |
|---|---|---|---|---|---|---|
| Stufe | | 1 | 2 | 1 | 2 | 3 |
| Säureeinspeisung: | kg/h | 6.000 | 2.565 | 6.000 | 4.275 | 2.250 |
| | % H₂SO₄ | 30 | 70 | 30 | 42,1 | 80 |
| Temperatur | °C | 100 | 330 | 65 | 102-180 | 330 |
| Druck | mbar | 100 | 1.000 | 100 | 550 | 1.000 |
| Säurekonzentration | % H₂SO₄ | 70 | 96 | 42,1 | 42,1-80 | 96 |
| H₂O-Verdampfung | kg/h | 3.435 | 690 | 1.725 | 2.025 | 375 |
| WAT-Fläche | m² | 100 | | 43 | 11 | |
| Säurezwangsumlauf | m³/h | 1.200 | | 530 | - | |
| Kühlwasser (30°C) | m³/h | 204 | 170 | 100 | - | 120 |
| Heizdampf | bar | 3 | | - | 15 | |
| | kg/h | 4.465 | | | 3.000 | |
| | GJ/h | 12,17 | | | 8,37 | |
| Heizdampfkondensat | °C | 100 | | | 196 | |
| | GJ/h | 2,51 | | | 2,54 | |
| Brennstoffverbrauch | GJ/h | | 4,48 | | | 3,17 |
| Gesamtenergiebedarf netto bei Kondensatnutzung | GJ/h | 14,14 | | | 9,00 | |
| Gesamtkühlwasserbedarf | m³/h | 374 | | | 220 | |

**Patentansprüche**

1. Verfahren zum Aufkonzentrieren von Schwefelsäure auf Konzentrationen bis ca. 80 % H₂SO₄ durch mehrstufige Eindampfung, dadurch gekennzeichnet, daß die Eindampfung auf Konzentration von 40 bis 65 % H₂SO₄ bei Unterdruck in Umlauf- oder Fallfilmverdampfern erfolgt, wobei eine Verdampferstufe durch die Brüden aus einem nachgeschalteten Horizontalverdampfer beheizt wird, in dem die Schwefelsäure bei geringem Unterdruck, Normaldruck oder Überdruck auf Konzentrationen vos 66 bis 80 % H₂SO₄ eingedampft wird.

2. Verfahren gemäß Anspruch 1, dadurch gekennzeichnet, daß die Eindampfung der Schwefelsäure in Umlauf-oder Fallfilmverdampfern einstufig oder mehrstufig bei Temperaturen bis maximal 120°C erfolgt.

3. Verfahren gemäß einem der Ansprüche 1 oder 2, dadurch gekennzeichnet, daß die Eindampfung der Schwefelsäure im Horizontalverdampfer so erfolgt, daß die 66 - 80 %ige Schwefelsäure mit Temperaturen von 160 bis 195°C ausgespeist wird.

4. Verfahren gemäß einem oder mehrerer der Ansprüche 1 bis 3, dadurch gekennzeichnet, daß der Horizontalverdampfer mit Heizdampf von 8 - 20 bar beheizt wird und der bei der Entspannung des Heizdampfkondensats freiwerdende Dampf in den Dampfraum eines Wärmetauschers der Umlauf- oder Fallfilmverdampfer geleitet wird.

5. Verfahren gemäß einem oder mehrerer der Ansprüche 1 bis 4, dadurch gekennzeichnet, daß im Horizontalverdampfer Einbauten senkrecht zu seinen Wärmetauscherbündeln vorgenommen werden.

6. Verfahren gemäß einem oder mehreren der Ansprüche 1 bis 5, dadurch gekennzeichnet, daß die in den Horizontalverdampfer eingespeiste 40 - 70 %ige Schwefelsäure durch die aus dem Horizontalverdampfer ausgespeiste 65 - 80 %ige Schwefelsäure auf eine Temperatur im Bereich der Siedetemperatur der eingespeisten Säure beim gegebenen Verdampfungsdruck aufgeheizt wird.

## Claims

1. A method of concentrating sulphuric acid to about 80% $H_2SO_4$ by multi-stage evaporation, characterised by evaporation to a concentration of 40 to 65% $H_2SO_4$ at negative pressure in circulating or falling-film evaporators, an evaporator stage being heated by the vapours from a downstream horizontal evaporator in which the sulphuric acid is evaporated at slight negative pressure, normal pressure or excess pressure to concentrations of 66 to 80% $H_2SO_4$.

2. A method according to claim 1, characterised in that the sulphuric acid is evaporated in circulating or falling-film evaporators in one or more stages and at temperatures up to a maximum of 120°C.

3. A method according to claim 1 or 2, characterised in that the sulphuric acid is evaporated in a horizontal evaporator so as to produce 66 - 80% sulphuric acid at temperatures of 160 to 195°C.

4. A method according to one or more of claims 1 to 3, characterised in that the horizontal evaporator is heated with steam at 8 - 20 bar and the steam evolved by expanding the concentrated heating steam is conveyed to the steam space of a heat exchanger in the circulating or falling-film evaporator.

5. A method according to one or more of claims 1 to 4, characterised in that furniture elements at right angles to the bunches of heat exchangers are incorporated in the horizontal evaporator.

6. A method according to one or more of claims 1 to 5, characterised in that the 40 - 70% sulphuric acid fed into the horizontal evaporator is heated by the 65 - 80% sulphuric acid discharged from the horizontal evaporator to a temperature near the boiling-point of the fed-in acid at the given evaporation pressure.

## Revendications

1. Procédé pour concentrer de l'acide sulfurique à des concentrations allant jusqu'à environ 80 % de $H_2SO_4$ par évaporation en plusieurs étapes, caractérisé en ce que l'évaporation est effectuée jusqu'à une concentration de 40 à 65 % de $H_2SO_4$ en dépression dans des évaporateurs à circulation ou à film tombant, un étage de l'évaporateur étant alors chauffé par les vapeurs chaudes sortant d'un évaporateur horizontal monté à la suite, dans lequel l'acide sulfurique est concentré par évaporation en légère dépression, à la pression normale ou en surpression jusqu'à des concentrations de 66 à 80 % en $H_2SO_4$.

2. Procédé suivant la revendication 1, caractérisé en ce que la concentration par évaporation de l'acide sulfurique est effectuée en un ou plusieurs étages dans des évaporateurs à circulation ou à film tombant, à des températures atteignant un maximum de 120° C.

3. Procédé suivant l'une des revendications 1 ou 2, caractérisé en ce que la concentration par évaporation de l'acide sulfurique dans l'évaporateur horizontal est effectuée de façon telle que l'acide sulfurique à 66-80 % sorte à des températures de 160 à 195° C.

4. Procédé suivant une ou plusieurs des revendications 1 à 3, caractérisé en ce que l'évaporateur horizontal est chauffé avec de la vapeur chaude sous pression de 8 à 20 bars et la vapeur libérée lors de la détente du condensat de vapeur chaude est envoyée à la chambre à vapeur d'un échangeur de chaleur des évaporateurs à circulation ou à film tombant.

5. Procédé suivant une ou plusieurs des revendications 1 à 4, caractérisé en ce que des insertions sont effectuées dans l'évaporateur horizontal perpendiculairement à ses faisceaux d'échangeurs de chaleur.

6. Procédé suivant une ou plusieurs des revendications 1 à 5, caractérisé en ce que l'acide sulfurique à 40-70 % introduit dans l'évaporateur horizontal est chauffé par l'acide sulfurique à 65-80 % déchargé de l'évaporateur horizontal à une température de l'ordre de la température d'ébullition de l'acide injecté à la pression d'évaporation donnée.

FIG. 1